# EUROPÄISCHE PATENTSCHRIFT

(11) **EP 2 193 282 B1**
(45) Veröffentlichungstag und Bekanntmachung des Hinweises auf die Patenterteilung: **06.06.2012**
(21) Anmeldenummer: 08801245.5
(22) Anmeldetag: 28.08.2008
(51) Int. Cl.: F16D 48/02

(54) **HYDRAULISCHES ELEMENT**
HYDRAULIC ELEMENT
ELÉMENT HYDRAULIQUE

(30) Priorität: 20.09.2007 DE 102007045034
(43) Veröffentlichungstag der Anmeldung: 09.06.2010
(73) Patentinhaber: Schaeffler Technologies AG & Co. KG, 91074 Herzogenaurach (DE)
(72) Erfinder: RAMMHOFER, Thomas, 77880 Sasbach (DE); GRABENSTÄTTER, Jan, 76593 Gernsbach (DE)
(86) Internationale Anmeldenummer: PCT/DE2008/001438
(87) Internationale Veröffentlichungsnummer: WO 2009/036729

(56) Entgegenhaltungen:
- DE-A1- 4 417 961
- DE-A1- 10 059 382
- GB-A- 2 022 778
- GB-A- 2 099 085
- US-A- 2 490 511

## Beschreibung

Die vorliegende Erfindung betrifft ein hydraulisches Element, insbesondere zur Anordnung in einer Druckleitung zwischen einem Geberzylinder und einem Nehmerzylinder einer hydraulischen Kupplungsbetätigung, mit einem Gehäuse, das einen geberzylinderseitigen Hydraulikanschluss sowie einen nehmerzylinderseitigen Hydraulikanschluss aufweist und das eine Ventilanordnung aufnimmt.

Aus der DE 100 59 382, dort insbesondere Fig. 6, ist ein gattungsbildendes hydraulisches Element, ein so genanntes Ventilkribbelfilter, bekannt, das zwei voneinander unabhängige federvorbelastete Rückschlagventile umfasst. Der Öffnungsdruck in beiden Durchströmungsrichtungen kann durch die Federvorlast für jede Richtung einzeln festgelegt werden. Ein derartiges besteht aus vielen Bauteilen und ist aufwandig in der Montage.

Bekannt sind auch hydraulische Elemente, bei denen die Ventilfunktion durch Schlauchventile für jeweils eine Durchflussrichtung gebildet wird.

Außerdem ist die DE 100 59 382 A1 bekannt, die eine Lösung für ein hydraulisches System offenbart, das ein Druckbegrenzungsventil enthält, in dessen Gehäuse zwei Ventilkörper fliegend gelagert sind, die wechselseitig entgegen der Wirkung eines axial wirksamen Energiespeichers einen Leitungsquerschnitt des hydraulischen Systems abdichten, so dass zumindest ein Teil eines axialen Weges des Schließkörpers bedämpft ist.

Aus dem Stand der Technik bekannte gattungsgemäße hydraulische Elemente umfassen eine Vielzahl von Einzelteilen, deren Montage aufwändig ist.

Eine Aufgabe der vorliegenden Erfindung ist es, für ein derartiges hydraulisches Element einen einfacheren Aufbau anzugeben, Insbesondere dieses einfacher, beispielsweise unter Verwendung von weniger Einzelteilen oder Einzelteilen mit geringeren Genauigkeitsanforderungen, herstellen zu können.

Dieses Problem wird gelöst durch ein hydraulisches Element, insbesondere zur Anordnung in einer Druckleitung zwischen einem Geberzylinder und einem Nehmerzylinder einer hydraulischen Kupplungsbetätigung, mit einem Gehäuse, das einen geberzylinderseitigen Hydraulikanschluss sowie einen nehmerzylinderseitigen Hydraulikanschluss aufweist und das eine Ventilanordnung aufnimmt, die Ventilanordnung zwei Ventilkörper aufweist, die fliegend in dem Gehäuse gelagert sind und gegen die Kraft einer Feder relativ zueinander verschoben werden können , wobei die Ventilanordnung vorzugsweise einen äußeren Ventilkörper und einen inneren Ventilkörper umfasst. Der äußere Ventilkörper umfasst einen becherförmigen Ventilbecher, in dem ein röhrenförmiger Bereich des inneren Ventilkörpers verschiebbar gelagert ist, wobei der Ventilbecher und der röhrenförmige Bereich jeweils mindestens eine Verbindungsbohrung aufweisen, die abhängig von der relativen Stellung der Ventilkörper zueinander in Deckung gebracht werden können.

Die Ventilkörper geben je nach relativer Stellung zueinander einen Durchfluss von Fluid zwischen beiden Hydraulikanschlüssen frei oder sperren diesen.

Der äußere Ventilkörper umfasst vorzugsweise einen Ventilkopf, der eine axiale Bohrung und eine mit dieser verbundene radiale Bohrung aufweist. Der Ventilkopf dient insbesondere der radialen Führung des Ventilkörpers in einem hohlzylindrischen Bereich des Gehäuses.

Der äußere Ventilkörper und der innere Ventilkörper umfassen vorzugsweise ein Mittel, das eine Drehung beider gegeneinander verhindert. Dadurch wird verhindert, dass beide Teile so gegeneinander verdreht sind, dass die Bohrungen nicht zur Deckung gebracht werden können. Das Mittel umfasst vorzugsweise eine Zunge des inneren Ventilkörpers, die in einer Axialnut des äußeren Ventilkörpers geführt ist. Alternativ könnte diese Funktion auch z.B. durch die zwischen den beiden Ventilköpfen angeordnete Feder übernommen werden.

Der innere Ventilkörper umfasst vorzugsweise einen Ventilkopf, der mit dem Gehäuse in einer axialen Endstellung des Ventilkörpers einen Ventilsitz bildet. Der Ventilsitz dichtet die Geberzylinderseite gegenüber dem Bereich, der sich zwischen den beiden Ventilköpfen befindet, ab, sodass Fluid nur über die axiale Bohrung des inneren Ventilkörpers fließen kann. Dadurch hat der Dämpfungsfilter in den beiden Durchflussrichtungen unterschiedliche Strömungswiderstände.

Der Ventilkopf des inneren Ventilkörpers lässt vorzugsweise gegenüber einem hohlzylindrischen Bereich des Gehäuses einen Spalt. Durch den Spalt kann bei aus dem Ventilsitz geschobenem Ventilkopf Fluid fließen.

Das Gehäuse umfasst vorzugsweise an einer Seite eine Kupplungsbaugruppe. Die Kupplungsbaugruppe wird nach Montage der Filteranordnung montiert.

Das eingangs genannte Problem wird auch gelöst durch eine hydraulische Kupplungsbetätigung mit einem Geberzylinder, einem Nehmerzylinder und eine diese verbindende Druckleitung, wobei in der Druckleitung ein erfindungsgemäßes hydraulisches Element angeordnet ist.

Im Folgenden werden Ausführungsbeispiele der Erfindung anhand der beiliegenden Zeichnungen erläutert. Dabei zeigen:
- Fig. 1: eine schematische Darstellung eines hydraulischen Systems zur Betätigung einer Fahrzeugkupplung;
- Fig. 2: ein Ausführungsbeispiel eines erfindungsgemäßen Dämpfungsfilters im Längsschnitt;
- Fig. 3: den Dämpfungsfilter gemäß Fig. 2 im Schnitt A-A.

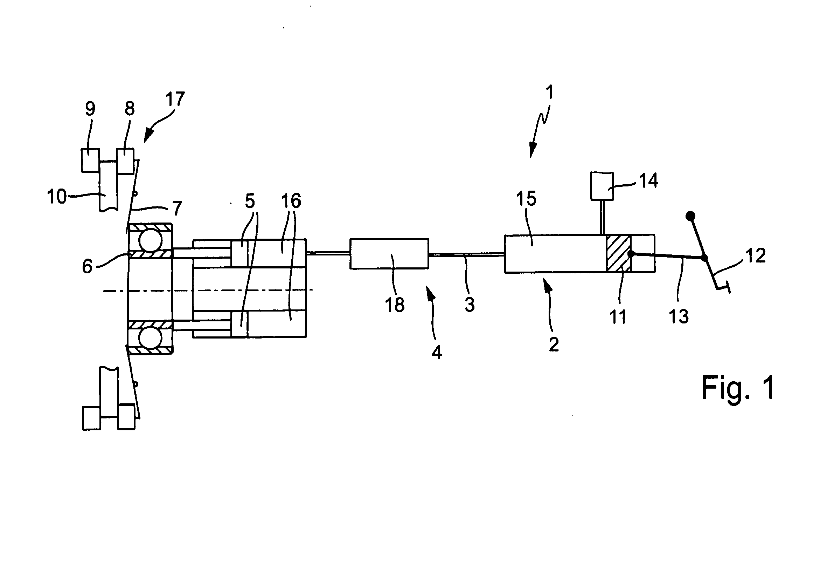

Fig. 1 zeigt als Beispiel für ein hydraulisches Kraftübertragungssystem eine hydraulische Kupplungsbetätigung 1 für ein Kraftfahrzeug. Die hydraulische Kupplungsbetätigung 1 umfasst in an sich bekannter Weise einen Geberzylinder 2, der über eine hydraulische Druckleitung 3 mit einem Nehmerzylinder 4 hydraulisch verbunden ist. Der Nehmerzylinder 4 kann beispielsweise als ringförmiger Nehmerzylinder, als so genannter Zentralausrücker, ausgebildet sein, wobei in einem ringförmigen Zylindergehäuse ein ringförmiger Nehmerzylinderkolben 5 gelagert ist. Der ringförmige Nehmerzylinder 4 und der ringförmige Nehmerzylinderkolben 5 schließen einen wiederum ringförmigen Druckraum 16 ein. Bei einer Betätigung des Nehmerzylinderkolbens 5 wird über ein Ausrücklager 6 in an sich bekannter Weise eine Tellerfeder 7 betätigt. Die Tellerfeder 7 dient der Betätigung einer Fahrzeugkupplung 17. Diese umfasst eine Druckplatte 8, eine Gegendruckplatte 9 und eine Kupplungsscheibe 10. Die Tellerfeder 7 ist so vorgespannt, dass diese in Vorspannrichtung eine Druckplatte 8 auf eine Gegendruckplatt 9 drückt und dabei eine Kupplungsscheibe 10, die drehfest mit einer Getriebeeingangswelle verbunden ist, zwischen Druckplatte 8 und Gegendruckplatte 9 einklemmt. Die Druckplatte 8 und die Gegendruckplatt 9 sind dazu drehfest mit einer Kurbelwelle einer hier nicht dargestellten Brennkraftmaschine verbunden. Bei einer Druckbeaufschlagung des Nehmerzylinders 4 wird somit über den Nehmerzylinderkolben 5 und das Ausrücklager 6 die Tellerfeder 7 so bewegt, dass diese entgegen ihrer Vorspannrichtung den Anpressdruck der Druckplatt 8 in Richtung der Druckplatte 9 verringert und so die reibschlüssige Verbindung zwischen Kupplungsscheibe 10 und Druckplatte 8 bzw. Gegendruckplatte 9 löst. Der Geberzylinder 2 umfasst einen Geberzylinderkolben 11, der mittels eines Kupplungspedals 12 über eine Druckstange 13 betätigt wird. Ein Gehäuse des Geberzylinders 2 sowie der darin beweglich angeordnete Geberzylinderkolben 11 schließen einen Druckraum 15 ein. Ein Nachlaufbehälter 14 ist bei drucklosem System, dabei ist der Geberzylinderkolben 11 ist seiner am Weitesten aus dem Geberzylinder 2 herausgezogenen Stellung, hydraulisch mit dem Druckraum 15 verbunden.

Bei einer wie in Fig. 1 dargestellten hydraulischen Kupplungsbetätigung 1 werden Schwingungen von dem nicht dargestellten Verbrennungsmotor, insbesondere dessen Kurbelwelle, über Bauteile der Fahrzeugkupplung 17 auf den Nehmerzylinder 4 übertragen. Diese Schwingungen erzeugen in dem Druckraum des Nehmerzylinders 4 und damit in dem gesamten hydraulischen System umfassend die Druckleitung 3 und den Geberzylinder 2 Druckschwingungen, die sich auch als Schwingungen an dem Kupplungspedal bemerkbar machen. Zur Dämpfung dieser Druckschwingungen (Druckpulsationen) ist in der Druckleitung 3 ein hydraulisches Element 18, nachfolgend als Dämpfungsfilter 18 bezeichnet, angeordnet.

Die hydraulische Kupplungsbetätigung gemäß Fig. 1 ist an sich bekannt. Statt eines Zentralausrückers als Nehmerzylinder 4 können hier auch andere hydraulische Ausrücker verwendet werden, beispielsweise ein Hebelausrücker, der mit einem Nehmerzylinder zusammenwirkt. Ebenso kann statt einer Betätigung des Geberzylinders 2 mit einem Kupplungspedal 12 ein elektrischer Aktor oder dergleichen vorgesehen sein. Die Kupplung kann auch statt wie hier durch Kraftbeaufschlagung der Tellerfeder geöffnet zu werden durch Kraftbeaufschlagung geschlossen werden (aktiv zugedrückte Kupplung). Die Ausgestaltung des Geberzylinders sowie die des Nehmerzylinders und ebenso der Kupplung kann also beliebig sein, das zuvor dargestellte Ausführungsbeispiel ist hier nur eine von vielen Möglichkeiten.

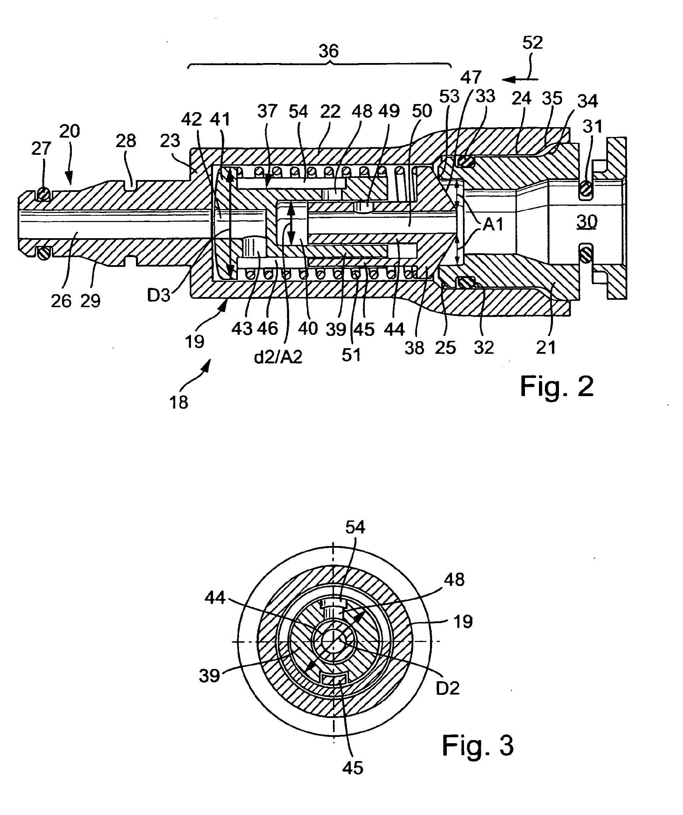

Fig. 2 zeigt einen erfindungsgemäßen Dämpfungsfilter 18 im Längsschnitt, Fig. 3 den Dämpfungsfilter der Fig. 2 im Schnitt A-A. Der Dämpfungsfilter 18 umfasst ein im Wesentlichen rotationssymmetrisches Gehäuse 19, das auf einer Seite einen hydraulischen Stecker 20 zur Verbindung des Dämpfungsfilters 18 mit einer hydraulischen Buchse der Druckleitung 3 gemäß Fig. 1 umfasst. Der Stecker 20 bildet einen nehmerzylinderseitigen Hydraulikanschluss. Auf der dem Stecker 20 gegenüberliegenden Seite des Gehäuses 19 ist eine Buchsenbaugruppe 21 als Kupplungsbaugruppe mit einer Buchse 30 für eine Steckverbindung in dem Gehäuse 19 aufgenommen. Die Buchse 30 bildet einen geberzylinderseitigen Hydraulikanschluss. Selbstverständlich können Stecker 20 und Buchse 30 auch gegeneinander vertauscht sein oder beide Anschlüsse können jeweils als Stecker oder Buchse ausgebildet sein. Der Stecker 20 und die Buchse 30 der Buchsenbaugruppe 21 können zu einer gleichartigen hydraulischen Steckverbindung gehören, in diesem Falle könnte man den Stecker 20 eines Dämpfungsfilters 18 mit der Buchse 30 eines anderen Dämpfungsfilters 18 verbinden, können aber auch unterschiedlichen Typen von hydraulischen Steckverbindungen angehören.

Das Gehäuse 19 umfasst einen hohlzylindrischen Bereich 22, der auf der einen Seite über einen becherförmigen Bodenbereich 23 in den Stecker 20 übergeht, und auf der anderen Seiten über einen kegelförmigen Bereich 25 in einen zweiten hohlzylindrischen Bereich 24 zur Aufnahme der Buchsenbaugruppe 21 übergeht. Der Stecker 20 weist eine Durchgangsbohrung 26 auf, die sich bis in den hohlzylindrischen Bereich 22 erstreckt.

Der Stecker 20 umfasst einen Dichtring 27 sowie eine Ringnut 28. Zwischen der Dichtung 27 und der Ringnut 28 ist ein kegelförmiger Bereich 29 angeordnet, sodass also der Durchmesser des Steckers 20 in diesem Bereich ansteigt. Die Buchsenbaugruppe 21 weist die Aufnahmebuchse 30 auf, die so ausgebildet ist, dass sie einen Stecker vergleichbar der Ausbildung des Steckers 20 aufnehmen kann. Dabei greift eine Drahtformfeder 31 in eine zu der Ringnut 28 korrespondierende Ringnut des aufzunehmenden Steckers, der in die Aufnahmeöffnung 30 eingeführt wird, ein. Die Buchsenbaugruppe 21 trägt in einer Ringnut 32 einen Dichtring 33, der der Abdichtung des Spaltes zwischen dem Gehäuse 19 und der Buchsenbaugruppe 21 dient. Die Buchsenbaugruppe 21 kann beispielsweise mit dem Gehäuse 19 verschraubt sein, ebenso kann hier aber auch ein Bajonettverschluss oder dergleichen vorgesehen sein oder beide Teile können miteinander verklebt oder verschweißt, zum Beispiel reibverschweißt, sein. Ein kegelförmiger Bereich 34 der Buchsenbaugruppe 21 und ein dazu korrespondierender kegelförmiger Bereich 35, der sich an den zweiten hohlzylindrischen Bereich 24 anschließt, dienen der axialen Positionierung der Buchsenbaugruppe 21 gegenüber dem Gehäuse 19.

Zwischen der Buchsenbaugruppe 21 und dem Boden 23 ist eine Ventilanordnung 36 gelagert. Die Ventilanordnung 36 umfasst einen äußeren Ventilkörper 37 und einen inneren Ventilkörper 38, die in dem Gehäuse 19 fliegend gelagert sind. Der äußere Ventilkörper 37 umfasst einen im Wesentlichen becherförmigen Ventilbecher 39, der eine Sacklockbohrung 40 mit einem Innendurchmesser d2 aufweist. Der Ventilbecher 39 geht an seiner Becherbodenseite über in einen Ventilkopf 41. Der Ventilbecher 39 hat einen Außendurchmesser D2, der selbstverständlich größer ist als der Innendurchmesser d2. Der Ventilkopf 41 hat einen Außendurchmesser D3, der mit dem Innendurchmesser des hohlzylindrischen Bereichs 22 eine Spielpassung bildet. Der Ventilkopf 41 weist eine axiale Bohrung 42 auf, die die Durchgangsbohrung 26 über eine radiale Bohrung 43 mit dem hohlzylindrischen Bereich 22 verbindet. Der innere Ventilkörper 38 umfasst einen röhrenförmigen Bereich 44 mit einem Außendurchmesser, der mit dem Innendurchmesser d2 des Ventilbechers 39 eine Spielpassung bildet. Der röhrenförmige Bereich 44 ist von dem Ventilbecher 39 umfasst und in diesem in axialer Richtung gleitend gelagert. Der innere Ventilkörper 38 umfasst des Weiteren eine Zunge 45, die sich im Wesentlichen parallel zum röhrenförmigen Bereich 44 erstreckt und in eine axiale Nut 46, die in axialer Richtung in den Ventilbecher 39 eingebracht ist, eingreift. Die Zunge 45 zusammen mit der axialen Nut 46 bewirkt eine Verdrehsicherung des inneren Ventilkörpers 38 gegenüber dem äußeren Ventilkörper 37. Der innere Ventilkörper 38 umfasst eine axiale Bohrung 50, die sich in axialer Richtung erstreckt sowie einen Ventilkopf 47, der im Wesentlichen kegelförmig ausgebildet ist. Der Ventilbecher 39 des äußeren Ventilkörpers 37 weist eine Verbindungsbohrung 48 auf, der röhrenförmige Bereich 44 des inneren Ventilkörpers 38 weist eine Verbindungsbohrung 49 auf. Die Verbindungsbohrung 48 geht über in eine Längsnut 54. Überdecken sich die Verbindungsbohrung 48 und 49 zumindest teilweise, so ist die axiale Bohrung 42 hydraulisch mit der axialen Bohrung 50 verbunden, sodass Fluid durch den Dämpfungsfilter 18 hindurch fließen kann. Zwischen dem Ventilkopf 41 des äußeren Ventilkörpers 37 und dem Ventilkopf 47 des inneren Ventilkörpers 38 ist eine Feder 51 angeordnet, die beide Ventilköpfe 41, 47 und damit den inneren Ventilkörper 38 und den äußeren Ventilkörper 37 auseinander drückt.

Wird von der Seite des Geberzylinders in Richtung des Nehmerzylinders Fluid verschoben, so wirkt auf die mit den Doppelpfeilen A1 gekennzeichnete kreisscheibenförmige Fläche des Ventilkopfes 47 des inneren Ventilkörpers 38 ein Druck, der abhängig von der Höhe des Druckunterschiedes und der Größe der Fläche A1 eine Kraft in Richtung des Pfeiles 52 auf den inneren Ventilkörper 38 ausübt. Dadurch wird der innere Ventilkörper 38 entgegen der Kraft der Feder 51 in Richtung des Pfeiles 52 gedrückt. Je nach Höhe der aus dem Druckunterschied herrührenden Kraft erfolgt diese Bewegung entgegen der Kraft der Feder 51 so weit bis sich die Verbindungsbohrungen 48 und 49 überschneiden. Nun kann Fluid von der axialen Bohrung 50 über die Verbindungsbohrungen 48 und 49, den freibleibenden Bereich des hohlzylindrischen Bereichs 22, die radiale Bohrung 43 und die axiale Bohrung 42 in die Durchgangsbohrung 26 fließen. Zwischen dem Außenumfang des Ventilkopfes 47 des inneren Ventilkörpers 38 und der Wand des hohlzylindrischen Bereiches 22 bleibt ein Spalt, über den ebenfalls Fluid strömen kann. Im drucklosen Zustand, wie dieser in Fig. 2 dargestellt ist, bildet der Ventilkopf 47 mit der Buchsenbaugruppe 21 einen Ventilsitz 53, der praktisch kein Fluid durchströmen lässt.

Beim Einkuppeln, wenn der Druck auf der Nehmerzylinderseite höher ist als auf der Geberzylinderseite, wirkt auf eine resultierende Fläche A2, dies ist die durch den Innendurchmesser d2 des Ventilbechers 39 bestimmte Fläche, ein von der Fläche A2 und dem Druckunterschied zwischen Geberzylinderseite und Nehmerzylinderseite abhängige Druckkraft entgegengesetzt der Pfeilrichtung des Pfeiles 52. Die hydraulisch wirksame Fläche bei einem auf der Nehmerzylinderseite höheren Druck als auf der Geberzylinderseite entspricht der Querschnittsfläche der Sacklochbohrung 40, da sich alle anderen auf den äußeren Ventilkörper wirkenden Druckkräfte aufheben, schließlich wirkt über die Bohrung 43 auch in dem Bereich, in dem die Feder 51 angeordnet ist, der Druck der Nehmerzylinderseite. Übersteigt diese Druckkraft die Kraft der Feder 51, so wird der äußere Ventilkörper 37 entgegen der Pfeilrichtung des Pfeiles 52 bewegt, sodass sich die Verbindungsbohrung 48 und 49 -abhängig vom Druckunterschied auf Geber- und Nehmerzylinderseite und der Federkraft der Feder 51- überschneiden oder zumindest teilweise überschneiden und den Durchfluss freigeben. Die Verbindungsbohrungen 48 und 49 können also in beiden Durchflussrichtungen abhängig von der relativen Stellung der Ventilkörper zueinander in Deckung gebracht werden.

Die interne Leckage zwischen Geber- und Nehmerzylinderseite wird durch den Spalt bestimmt, den die Führung des inneren Ventilkörpers 38 im äußeren Ventilkörper 37 aufweist. Bei einer Vakuum-Druckbefüllung wird der Nehmerzylinder über diesen Spalt evakuiert.

### Bezugszeichenliste

- 1: hydraulische Kupplungsbetätigung
- 2: Geberzylinder
- 3: Druckleitung
- 4: Nehmerzylinder
- 5: Nehmerzylinderkolben
- 6: Ausrücklager
- 7: Tellerfeder
- 8: Druckplatte
- 9: Gegendruckplatte
- 10: Kupplungsscheibe
- 11: Geberzylinderkolben
- 12: Kupplungspedals
- 13: Druckstange
- 14: Nachlaufbehälter
- 15: Druckraum
- 16: Druckraum
- 17: Fahrzeugkupplung
- 18: Dämpfungsfilter
- 19: Gehäuse
- 20: Stecker
- 21: Buchsenbaugruppe
- 22: hohlzylindrischer Bereich
- 23: Bodenbereich
- 24: zweiter zylindrischer Bereich
- 25: kegelförmiger Bereich
- 26: Durchgangsbohrung
- 27: Dichtring
- 28: Ringnut
- 29: kegelförmiger Bereich
- 30: Aufnahmebuchse
- 31: Drahtformfeder
- 32: Ringnut
- 33: Dichtung
- 34: kegelförmiger Bereich
- 35: kegelförmiger Bereich
- 36: Ventilanordnung
- 37: äußerer Ventilkörper
- 38: innerer Ventilkörper
- 39: Ventilbecher
- 40: Sacklochbohrung
- 41: Ventilkopf
- 42: axiale Bohrung
- 43: radiale Bohrung
- 44: röhrenförmiger Bereich
- 45: Zunge
- 46: Axialnut
- 47: Ventilkopf
- 48: Verbindungsbohrung
- 49: Verbindungsbohrung
- 50: axiale Bohrung
- 51: Feder
- 52: Pfeil
- 53: Ventilsitz
- 54: Längsnut

## Patentansprüche

1. Hydraulisches Element (18), insbesondere zur Anordnung in einer Druckleitung (3) zwischen einem Geberzylinder (2) und einem Nehmerzylinder (4) einer hydraulischen Kupplungsbetätigung (1), mit einem Gehäuse (19), das einen geberzylinderseitigen Hydraulikanschluss (30) sowie einen nehmerzylinderseitigen Hydraulikanschluss (20) aufweist und das eine Ventilanordnung (36) aufnimmt, die zwei Ventilkörper (37, 38) aufweist, die fliegend in dem Gehäuse (19) gelagert sind und gegen die Kraft einer Feder (51) relativ zueinander verschoben werden können, wobei die Ventilanordnung (36) einen äußeren Ventilkörper (37) und einen inneren Ventilkörper (38) umfasst, wobei der äußere Ventilkörper (37) einen becherförmigen Ventilbecher (39) umfasst, in dem ein röhrenförmiger Bereich (44) des inneren Ventilkörpers (38) verschiebbar gelagert ist, **dadurch gekennzeichnet, dass** der Ventilbecher (39) und der röhrenförmige Bereich (44) jeweils mindestens eine Verbindungsbohrung (48, 49) aufweisen, die abhängig von der relativen Stellung der Ventilkörper (37, 38) zueinander in Deckung gebracht werden können.

2. Hydraulisches Element nach Anspruch 1, **dadurch gekennzeichnet, dass** der äußere Ventilkörper (37) einen Ventilkopf (41) umfasst, der eine axiale Bohrung (42) und eine mit dieser verbundene radiale Bohrung (43) aufweist.

3. Hydraulisches Element nach Anspruch 1, **dadurch gekennzeichnet, dass** der äußere Ventilkörper (37) und der innere Ventilkörper (38) ein Mittel (45, 46) umfassen, das eine Drehung beider gegeneinander verhindert.

4. Hydraulisches Element nach Anspruch 3, **dadurch gekennzeichnet, dass** das Mittel eine Zunge (45) des inneren Ventilkörpers (37) umfasst, die in einer Axialnut (46) des äußeren Ventilkörpers (37) geführt ist.

5. Hydraulisches Element nach Anspruch 1 bis 4, **dadurch gekennzeichnet, dass** der innere Ventilkörper (38) einen Ventilkopf (47) umfasst, der mit dem Gehäuse (19) in einer axialen Endstellung des Ventilkörpers einen Ventilsitz bildet.

6. Hydraulisches Element nach Anspruch 5 **dadurch gekennzeichnet, dass** der Ventilkopf (47) des inneren Ventilkörpers (38) gegenüber einem hohlzylindrischen Bereich (22) des Gehäuses (19) einen Spalt lässt.

7. Hydraulisches Element nach Anspruch 1, **dadurch gekennzeichnet, dass** das Gehäuse (19) an einer Seite eine Kupplungsbaugruppe (21) umfasst.

8. Hydraulische Kupplungsbetätigung mit einem Geberzylinder (2), einem Nehmerzyllnder (4) und eine diese verbindende Druckleitung (3), **dadurch gekennzeichnet, dass** in der Druckleitung (3) ein hydraulisches Element (18) nach einem der Ansprüche 1 bis 7 angeordnet ist.

## Claims

1. Hydraulic element (18), in particular for arrangement in a pressure line (3) between a master cylinder (2) and a slave cylinder (4) of a hydraulic clutch actuation assembly (1), with a housing (19) which has a master cylinder-side hydraulic connection (30) and a slave cylinder-side hydraulic connection (20) and which receives a valve arrangement (36) which has two valve bodies (37, 38) which are mounted, overhung, in the housing (19) and can be displaced in relation to one another counter to the force of a spring (51), the valve arrangement (36) comprising an outer valve body (37) and an inner valve body (38), the outer valve body (37) comprising a bowl-shaped valve bowl (39) in which a tubular region (44) of the inner valve body (38) is mounted displaceably, **characterized in that** the valve bowl (39) and the tubular region (44) have in each case at least one connecting bore (48, 49), which connecting bores can be brought into congruence with one another as a function of the relative position of the valve bodies (37, 38).

2. Hydraulic element according to Claim 1, **characterized in that** the outer valve body (37) comprises a valve head (41) which has an axial bore (42) and a radial bore (43) connected to the latter.

3. Hydraulic element according to Claim 1, **characterized in that** the outer valve body (37) and the inner valve body (38) comprise a means (45, 46) which prevents both from rotating with respect to one another.

4. Hydraulic element according to Claim 3, **characterized in that** the means comprises a tongue (45) of the inner valve body (37), the said tongue being guided in an axial groove (46) of the outer valve body (37).

5. Hydraulic element according to Claims 1 to 4, **characterized in that** the inner valve body (38) comprises a valve head (47) which forms with the housing (19) a valve seat in an axial end position of the valve body.

6. Hydraulic element according to Claim 5, **characterized in that** the valve head (47) of the inner valve body (38) leaves a gap with respect to a hollow-cylindrical region (22) of the housing (19).

7. Hydraulic element according to Claim 1, **characterized in that** the housing (19) comprises a clutch subassembly (21) on one side.

8. Hydraulic clutch actuation assembly with a master cylinder (2), a slave cylinder (4) and a pressure line (3) connecting these, **characterized in that** a hydraulic element (18) according to one of Claims 1 to 7 is arranged in the pressure line (3).

## Revendications

1. Elément hydraulique (18), notamment devant être disposé dans une conduite sous pression (3) entre un maître-cylindre (2) et un cylindre récepteur (4) d'un actionnement d'accouplement hydraulique (1), comprenant un boîtier (19) qui présente un raccord hydraulique (30) du côté du maître-cylindre et un raccord hydraulique (20) du côté du cylindre récepteur et qui reçoit un agencement de soupape (36) qui présente deux corps de soupape (37, 38), qui sont montés en porte-à-faux dans le boîtier (19) et qui peuvent être poussés l'un par rapport à l'autre à l'encontre de la force d'un ressort (51), l'agencement de soupape (36) comprenant un corps de soupape extérieur (37) et un corps de soupape intérieur (38), le corps de soupape extérieur (37) comprenant une coupelle de soupape en forme de godet (39) dans laquelle est montée de manière déplaçable une région de forme tubulaire (44) du corps de soupape intérieur (38), **caractérisé en ce que** la coupelle de soupape (39) et la région de forme tubulaire (44) présentent chacune au moins un alésage de connexion (48, 49), lesquels alésages peuvent être amenés en alignement l'un par rapport à l'autre en fonction de la position relative des corps de soupape (37, 38).

2. Elément hydraulique selon la revendication 1, **caractérisé en ce que** le corps de soupape extérieur (37) comprend une tête de soupape (41) qui présente un alésage axial (42) et un alésage radial (43) connecté à celui-ci.

3. Elément hydraulique selon la revendication 1, **caractérisé en ce que** le corps de soupape extérieur (37) et le corps de soupape intérieur (38) comprennent un moyen (45, 46) qui empêche une rotation des deux l'un par rapport à l'autre.

4. Elément hydraulique selon la revendication 3, **caractérisé en ce que** le moyen comprend une langue (45) du corps de soupape intérieur (37), qui est guidée dans une rainure axiale (46) du corps de soupape extérieur (37).

5. Elément hydraulique selon les revendications 1 à 4, **caractérisé en ce que** le corps de soupape intérieur (38) comprend une tête de soupape (47) qui forme un siège de soupape avec le boîtier (19) dans une position d'extrémité axiale du corps de soupape.

6. Elément hydraulique selon la revendication 5, **caractérisé en ce que** la tête de soupape (47) du corps de soupape intérieur (38) forme une fente avec une région cylindrique creuse (22) du boîtier (19).

7. Elément hydraulique selon la revendication 1, **caractérisé en ce que** le boîtier (19) comprend un module d'accouplement (21) au niveau d'un côté.

8. Actionnement d'accouplement hydraulique comprenant un maître-cylindre (2), un cylindre récepteur (4) et une conduite sous pression (3) les reliant, **caractérisé en ce que** dans la conduite sous pression (3) est disposé un élément hydraulique (18) selon l'une quelconque des revendications 1 à 7.
